# EUROPEAN PATENT APPLICATION

(11) **EP 4 831 008 A1**
(43) Date of publication of application: **28.10.2026**
(21) Application number: 24905965.0
(22) Date of filing: 20.11.2024
(51) Int. Cl.: B60R 16/023

(54) **CONTROL SYSTEM AND VEHICLE**

(30) Priority: 21.12.2023 CN 202323512424 U
(71) Applicant: BYD Company Limited, Shenzhen, Guangdong 518118 (CN)
(72) Inventor: LV, Shujun, Shenzhen, Guangdong 518118 (CN); PENG, Wang, Shenzhen, Guangdong 518118 (CN); YANG, Ke, Shenzhen, Guangdong 518118 (CN); ZHAO, Xi, Shenzhen, Guangdong 518118 (CN); ZHANG, Ruiting, Shenzhen, Guangdong 518118 (CN)
(74) Representative: Mathys & Squire
(86) International application number: PCT/CN2024/133176
(87) International publication number: WO 2025/130480

(57) **Abstract**

A control system and a vehicle are provided. The control system includes a body domain controller and a power domain controller of the vehicle. The body domain controller is connected to a power signal apparatus within a first preset distance range. The power domain controller is connected to a body signal apparatus within a second preset distance range. The body domain controller and the power domain controller are connected via a first communication bus to transmit a signal of the power signal apparatus and a signal of the body signal apparatus to the power domain controller and the body domain controller respectively. A distance between the power signal apparatus and the power domain controller exceeds the first preset distance range. A distance between the body signal apparatus and the body domain controller exceeds the second preset distance range.

## Description

This application claims priority to Chinese Patent Application No. 202323512424.X, filed with the China National Intellectual Property Administration on December 21, 2023 and entitled "CONTROL SYSTEM AND VEHICLE", which is incorporated herein by reference in its entirety.

### TECHNICAL FIELD

This disclosure generally relates to the field of vehicle technologies, and more specifically to a control system and a vehicle.

### BACKGROUND

Actual driving and use of a vehicle requires the cooperation of numerous components. Based on this, in conventional technologies, a vehicle is generally divided into multiple parts based on its functions and managed by controllers, in other words, components and signals of the vehicle are managed using a domain control architecture. For example, the vehicle may include a body domain, a chassis domain, a power domain, a cockpit domain, and an autonomous driving domain. The domains include respective controllers, namely, a body domain controller, a chassis domain controller, a power domain controller, a cockpit domain controller, and an autonomous driving domain controller. The entire vehicle is controlled through the cooperation between the controllers of the different domains.

In conventional technologies, different controllers need to acquire, based on vehicle functions they manage, signals from vehicle parts that they respectively control. For example, the body domain controller is configured to integrate basic drivers of body electronics, a key function, and control functions of components such as lamps, doors, and windows.

However, because some controllers need to acquire signals from various positions across the vehicle, long wiring harnesses are required to connect so many components. This is especially true for long-body vehicles, which significantly increases costs of wiring harnesses and connectors, and also leads to problems such as signal acquisition errors or delays.

### SUMMARY

In view of the foregoing defects or deficiencies in conventional technologies, it is desirable to provide a control system and a vehicle that can resolve the problem of possible errors or delays in long-distance signal acquisition, which occurs when some controllers need to acquire signals from various positions across a vehicle. This can significantly improve safety performance of vehicles and reduce costs of wiring harnesses and connectors.

According to a first aspect, a control system is provided and used in a vehicle. The system includes a body domain controller and a power domain controller for the vehicle.

The body domain controller is connected to a power signal apparatus within a first preset distance range.

The power domain controller is connected to a body signal apparatus within a second preset distance range.

The body domain controller and the power domain controller are connected via a first communication bus to transmit a signal of the power signal apparatus and a signal of the body signal apparatus to the power domain controller and the body domain controller respectively. A distance between the power signal apparatus and the power domain controller exceeds the first preset distance range. A distance between the body signal apparatus and the body domain controller exceeds the second preset distance range.

A distance between the power signal apparatus and the power domain controller exceeds the first preset distance range; and a distance between the body signal apparatus and the body domain controller exceeds the second preset distance range.

This application discloses the control system used in the vehicle. The control system includes the body domain controller and the power domain controller of the vehicle. Specifically, the body domain controller is connected to the power signal apparatus within the first preset distance range, the power domain controller is connected to the body signal apparatus within the second preset distance range, and the body domain controller and the power domain controller are connected via the first communication bus to transmit the signal of the power signal apparatus and the signal of the body signal apparatus to the power domain controller and the body domain controller respectively (wherein the distance between the power signal apparatus and the power domain controller exceeds the first preset distance range, and the distance between the body signal apparatus and the body domain controller exceeds the second preset distance range). In this way, the body domain controller and the power domain controller no longer acquire control signals only based on functional modules of the vehicle that they are responsible for, but acquire control signals from signal modules within a preset range of each controller according to the principle of proximity acquisition. This can ensure timeliness and accuracy of signal acquisition, greatly reduce the occurrence of problems such as missed signals, and thus greatly improve safety performance of the vehicle.

According to a second aspect, a vehicle is provided, including the control system according to the first aspect. The control system includes a body domain controller and a power domain controller of the vehicle.

The body domain controller is connected to a power signal apparatus within a first preset distance range.

The power domain controller is connected to a body signal apparatus within a second preset distance range.

The body domain controller and the power domain controller are connected via a first communication bus to transmit a signal of the power signal apparatus and a signal of the body signal apparatus to the power domain controller and the body domain controller respectively.

A distance between the power signal apparatus and the power domain controller exceeds the first preset distance range. A distance between the body signal apparatus and the body domain controller exceeds the second preset distance range.

Additional aspects and advantages of this application are partly set forth in the description below, partly become apparent from the description below, or may be learned by practice of this application.

### BRIEF DESCRIPTION OF DRAWINGS

Other features, objects, and advantages of this application will become more apparent from the following detailed descriptions of non-limiting embodiments with reference to the accompanying drawings.
FIG. 1 is a diagram 1 of a control system according to an embodiment of this application; and
FIG. 2 is a diagram 2 of a control system according to an embodiment of this application.

### DESCRIPTION OF EMBODIMENTS

The following describes in detail this application with reference to the accompanying drawings and embodiments. It will be understood that specific embodiments described herein are merely intended to explain a related application, but not to limit this application. In addition, it will be noted that, for ease of description, only a part related to this application is shown in the accompanying drawings.

It will be noted that, unless otherwise specified, embodiments in this application and features in embodiments can be combined with each other.

The following describes usage scenarios of this application.

In related technologies, a vehicle is generally divided into multiple parts, each managed by a controller. Different controllers function differently. Specifically, a body domain controller is configured to: control load drives and coordinate the activation of vehicle electrical appliances; a chassis domain controller is configured to control vehicle driving-related systems, including a transmission system, a driving system, a steering system, and an electronic parking brake system; and a power domain controller is configured to acquire a signal of an accelerator pedal and a signal of a brake pedal.

Specifically, the body domain controller is configured to control the vehicle system's integrated lighting, wiper and washer functions, central locking, gateway, window control, PEPS (Passive Entry and Passive Start) smart key, low-frequency antenna, and the like.

In related technologies, the power domain controller is configured to control movement and stopping of the vehicle. Based on this, a brake signal generated by a brake pedal and a drive signal generated by an accelerator pedal are directly acquired by the power domain controller; and a signal generated by an electronic parking brake is directly acquired by the chassis domain controller.

However, the above process has the following problems: because a CAN bus is responsible for transmission of all signals, it is likely to cause signal transmission errors and an inability to exchange signals with the power domain controller. Further, the accelerator pedal that generates an accelerator signal and the brake pedal that generates the brake signal are actually located at the front of the vehicle, while the power domain controller is located at the rear of the vehicle. In terms of an acquisition distance, the power domain controller is located too far, particularly for some large vehicles (such as trucks), which is not conducive to signal acquisition.

In view of this, this application provides a control system and a vehicle that can resolve the problem of possible error or delay in long-distance signal acquisition, which occurs when some controllers need to acquire signals from various positions across the vehicle. By enabling nearby acquisition of cross-domain signals, this significantly improves safety performance of the vehicle and reduces costs of wiring harnesses and connectors.

This application is described in detail with reference to the accompanying drawings and embodiments.

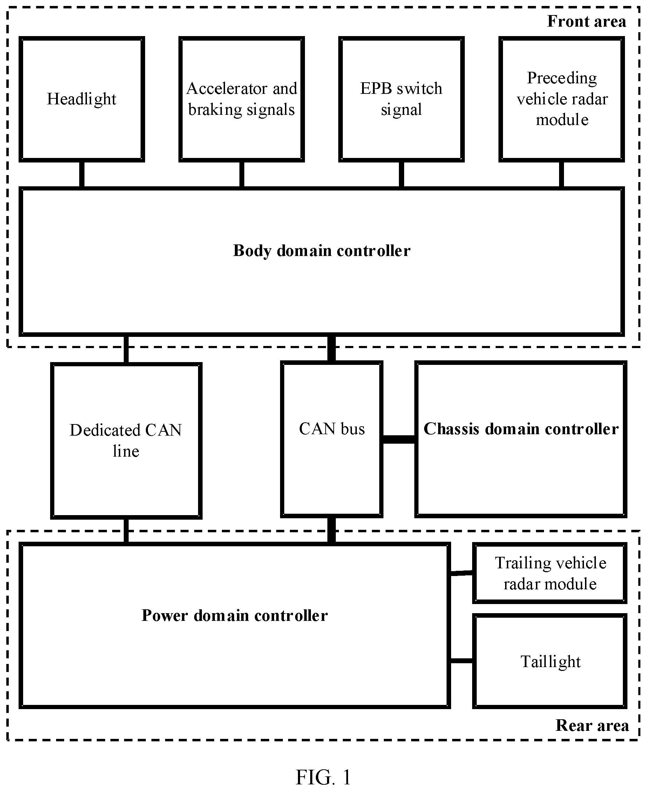

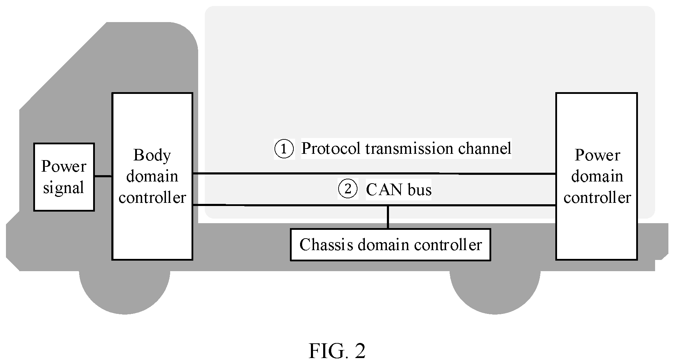

FIG. 1 and FIG. 2 each are a diagram of a control system according to an embodiment of this application. The method is performed by the foregoing vehicle. As shown in FIG. 1 and FIG. 2, the control system includes a body domain controller and a power domain controller of the vehicle.

In this embodiment of this application, the control system includes the body domain controller and the power domain controller of the vehicle.

It will be understood that for the body domain controller and power domain controller reference may be made to the above descriptions, and will not be repeated here.

In this embodiment of the application, the body domain controller is connected to a power signal apparatus within a first preset distance range.

In this embodiment of the application, the power domain controller is connected to a body signal apparatus within a second preset distance range.

In this embodiment of the application, the body domain controller and the power domain controller are connected via a first communication bus to transmit a signal of the power signal apparatus and a signal of the body signal apparatus to the power domain controller and the body domain controller respectively.

A distance between the power signal apparatus and the power domain controller exceeds the first preset distance range. A distance between the body signal apparatus and the body domain controller exceeds the second preset distance range.

For example, the first preset range may be preset by the control system or user-defined.

It will be understood that the distance between the power signal apparatus and the body domain controller being within the first preset range characterizes the power signal apparatus being close to the body domain controller.

Further, as mentioned above, when the body domain controller acquires a signal from a signal apparatus that is far away from the body domain controller, it is prone to problems such as a signal acquisition error or delay. Therefore, the body domain controller should acquire a signal from a signal apparatus that is closer to the body domain controller, namely, a signal within the first preset range, to implement nearby acquisition of cross-domain signals.

In this embodiment of this application, the power signal apparatus includes at least one signal sub-apparatus, namely, a signal sub-apparatus controlled by the power domain controller.

In this embodiment of the application, the power signal apparatus may be used to characterize multiple power signal sub-apparatuses in the vehicle that have different functions and are within the first preset range.

For example, the body domain controller is configured to: acquire a power signal of the power signal apparatus in the vehicle, and send the power signal to the power domain controller through a communication connection with the power domain controller.

For example, the power domain controller is configured to: receive the power signal through the communication connection with the body domain controller and control a drive status and a brake status of the vehicle based on the power signal.

Optionally, in this embodiment of the application, the body domain controller is located in a front area of the vehicle.

Optionally, in this embodiment of the application, the power signal apparatus specifically includes at least one of an accelerator pedal apparatus and a brake pedal apparatus.

In this embodiment of the application, the power signal includes at least one of the following: a drive start signal of the vehicle, a drive stop signal of the vehicle, a drive abnormality signal of the vehicle, a brake start signal of the vehicle, a brake stop signal of the vehicle, and a brake abnormality signal of the vehicle.

It will be understood that the drive start signal and the drive stop signal may be characterized by an angle of an accelerator pedal, and correspondingly the brake start signal and the brake stop signal may be characterized by an angle of the brake pedal. Further, the brake stop signal of the vehicle may include a signal related to an electronic parking brake.

Based on this, further, the power signal may include at least one of the following: an accelerator pedal angle signal and an accelerator pedal fault signal. The brake signal may include at least one of the following: a brake pedal angle signal, a brake pedal fault signal, an electronic parking brake trigger signal, an electronic parking brake deactivation signal, and an electronic parking brake abnormality signal.

In this embodiment of the application, at least one signal sub-module included in the power signal apparatus includes: a signal sub-module controlled by the body domain controller and/or a signal sub-module controlled by the power domain controller. This is not limited in embodiments of this application.

For example, when at least one signal sub-module included in the power signal apparatus includes the signal sub-apparatus controlled by the power domain controller, the body domain controller acquires a signal of the signal sub-apparatus according to a principle of proximity acquisition and sends the signal to the power domain controller, and finally the power domain controller receives the signal of the signal sub-apparatus and executes the signal of the signal sub-apparatus.

For example, the second preset range may be preset by the control system or user-defined.

It will be understood that the distance between the body signal apparatus and the power domain controller being within the second preset range characterizes the body signal apparatus being close to the power domain controller.

Further, as mentioned above, when the power domain controller acquires a signal from an apparatus that is far away from the power domain controller, it is prone to problems such as a signal acquisition error or delay. Therefore, the power domain controller should acquire a signal from an apparatus that is closer to the power domain controller, namely, a signal within the second preset range.

In this embodiment of the application, the body signal apparatus includes at least one signal sub-module.

In this embodiment of the application, the body signal apparatus may be used to characterize multiple power signal sub-apparatuses in the vehicle that have different functions and are within the second preset range.

Optionally, in this embodiment of the application, the body domain controller is located in the front area of the vehicle, and correspondingly the power domain controller can be set in a rear area of the vehicle.

It will be understood that as mentioned above, the body domain controller and the power domain controller are at different positions within the vehicle (generally, the body domain controller is located at the front of the vehicle and the power domain controller is located at the rear of the vehicle), and controllers in the vehicle control signal apparatuses according to their respective functions. Consequently, the body domain controller at the front of the vehicle may need to acquire and control a signal from a signal apparatus at the rear of the vehicle, and the power domain controller at the rear of the vehicle may need to acquire and control a signal from a signal apparatus at the front of the vehicle. This can lead to problems such as untimely or missed signal acquisition and control, and significantly reduce costs of wiring harnesses and connectors caused by long-distance transmission. Therefore, in this embodiment of the application, a signal apparatus that is closer to the body domain controller and a signal apparatus that is closer to the power domain controller are planned according to the principle of proximity acquisition. For details, reference is made to the following descriptions of the power domain controller and the body domain controller.

First, a planning method for a signal apparatus controlled by the power domain controller is as follows:

Optionally, in this embodiment of the application, the power domain controller is configured to: acquire a body domain control signal of the body signal apparatus located within the second preset range of the power domain controller, and control the body based on the body domain control signal.

For example, the distance between the body signal apparatus and the body domain controller exceeds the second preset range.

For example, for the second preset range, reference is made to the foregoing descriptions. Details are not described herein again.

It will be understood that functions of the body signal apparatus are associated with a body domain control module. However, because the distance between the body signal apparatus and the body domain controller exceeds the second preset range, that is, the body signal apparatus is closer to the power domain controller, the body domain control signal of the body signal apparatus is acquired and controlled by the power domain controller.

It will be noted that the body domain control signal is a signal that can be directly controlled, in other words, the body domain control signal does not depend on the body domain controller as hardware support for control. Instead, the signal may be executed by any controller after being acquired. Therefore, the power domain controller may control the body domain control signal.

In one example, when the body domain control signal includes a signal of a taillight within the second preset range of the power domain controller, the power domain controller is further configured to: acquire the taillight signal of the taillight and control the taillight based on the taillight signal.

Optionally, in this embodiment of the application, the body signal apparatus includes at least one of a lamp signal apparatus, a radar signal apparatus, and a camera signal apparatus in the rear area.

For example, the taillight includes brake lights, clearance lights, and rear turn signals on the rear of the vehicle body.

It will be understood that the taillight is located at the rear of the vehicle and is functionally a part of the body. However, the taillight is close to the power domain controller at the rear of the vehicle (correspondingly, it is far from the body domain controller at the front of the vehicle), and the taillight signal of the taillight is a controlled object, so there is no need to actively transmit the signal to the power domain controller. Therefore, according to the principle of proximity acquisition, the power domain controller can directly control the taillight after acquiring the taillight signal.

Second, a planning method for a signal apparatus controlled by the body domain controller is as follows:

Optionally, in this embodiment of this application, the body domain controller is configured to: acquire a power domain control signal of the power signal apparatus within the first preset range of the body domain controller, and control the vehicle power system based on the power domain control signal.

For example, the distance between the power signal apparatus and the power domain controller exceeds the first preset range.

It will be understood that functions of the power signal apparatus are associated with a power domain control module. However, because a distance between a first power domain control module and the power domain controller exceeds the first preset range, that is, the power signal apparatus is closer to the body domain controller, the power domain control signal of the power signal apparatus is acquired and controlled by the body domain controller.

It will be noted that the power domain control signal is a signal that can be directly controlled, in other words, the power domain control signal does not depend on the power domain controller as hardware support for control. Instead, the signal may be executed by any controller after being acquired. Therefore, the body domain controller may control the power domain control signal.

In one example, when the power domain control signal includes a preceding vehicle radar signal within the first preset range of the body domain controller, the body domain controller is further configured to acquire a preceding vehicle radar signal of a preceding vehicle radar module in the vehicle and control a preceding vehicle radar based on the preceding vehicle radar signal.

For example, the preceding vehicle radar module is located on the front of the body. The preceding vehicle radar module has built-in radar signal receiving and transmitting modules, and measures a distance and a vehicle speed by reflecting echoes.

It will be understood that the preceding vehicle radar module is located at the front of the vehicle and functionally belongs to the power domain. However, the preceding vehicle radar module is close to the body domain controller at the front of the vehicle (correspondingly, it is far from the power domain controller at the rear of the vehicle), and the preceding vehicle radar signal of the preceding vehicle radar module is a controlled object, so there is no need to actively transmit the signal to the body domain controller. Therefore, according to the principle of proximity acquisition, the body domain controller can directly control the preceding vehicle radar module after acquiring the preceding vehicle radar signal.

In this embodiment of this application, the at least one signal sub-module included in the body signal apparatus includes: a signal sub-module controlled by the body domain controller and/or a signal sub-apparatus controlled by the power domain controller. This is not limited in embodiments of this application.

In this embodiment of this application, the body domain controller is further configured to receive the power control sub-signal sent by the power domain controller.

For example, when the at least one signal sub-module included in the body signal apparatus includes the signal sub-module controlled by the body domain controller, according to the principle of proximity acquisition, a signal of the signal sub-module is acquired by the power domain controller, then sent by the power domain controller to the body domain controller, and finally received and executed by the body domain controller.

In this embodiment of the application, the first communication bus may be a CAN bus.

For example, the first communication bus includes a serial communication protocol bus of the vehicle.

This application discloses a control system used in a vehicle. The control system includes a body domain controller and a power domain controller of the vehicle. The body domain controller is connected to a power signal apparatus within a first preset distance range. The power domain controller is connected to a body signal apparatus within a second preset distance range. The body domain controller and the power domain controller are connected via a first communication bus to transmit a signal of the power signal apparatus and the signal of the body signal apparatus to the power domain controller and the body domain controller respectively (where a distance between the power signal apparatus and the power domain controller exceeds the first preset distance range, and a distance between the body signal apparatus and the body domain controller exceeds the second preset distance range). In this way, the body domain controller and the power domain controller no longer acquire control signals only based on functional modules of the vehicle that they are responsible for, but acquire control signals from signal modules within a preset range of each controller according to a principle of proximity. This can ensure timeliness and accuracy of signal acquisition, greatly reduce the occurrences of problems such as missed signals, and thus greatly improve safety performance of the vehicle.

Optionally, in this embodiment of this application, the body domain controller and the power domain controller are further connected via a protocol transmission channel.

For example, the protocol transmission channel is used to transmit the signal of the power signal apparatus.

Optionally, in this embodiment of this application, the body domain controller and the power domain controller are further connected via a second communication bus to implement transmission of the signal of the power signal apparatus.

In an example, the second communication bus may be a point-to-point dedicated CAN line between the body domain controller and the power domain controller, and the dedicated CAN line belongs to a driving behavior CAN network.

It will be understood that the second communication bus is specifically used to transmit signals between the power domain controller and the body domain controller. It will be noted that, as mentioned above, a vehicle with a domain control architecture (namely, a vehicle controlled as per multiple domains) is generally provided with a CAN bus for transmitting signals between different domains. The dedicated CAN line serving as the protocol transmission channel is a dedicated CAN line specifically for use between the body domain controller and the power domain controller.

Further, the dedicated CAN line may be implemented by modifying related protocol algorithms of the CAN bus of the vehicle, without changing hardware of the vehicle.

In another example, the protocol transmission channel may be a communication protocol transmission bus (CAN bus) of the vehicle.

It will be understood that a vehicle depot communication protocol transmission bus is used to execute signal acquisition and transmission processes corresponding to various control domains of the vehicle.

Optionally, in this embodiment of this application, the body domain controller and the power domain controller are further connected via a hardwire, and the hardwire is used to transmit the signal of the power signal apparatus based on a pulse width modulation signal. The pulse width modulation signal and power signal transmitted via the first and/or second communication bus can also be mutually verified.

In an example, the pulse width modulation signal based on which the power control signal is transmitted may be a first pulse width modulation (PWM) signal, the first pulse width modulation signal indicates the power control signal.

It will be understood that as mentioned above, there are a variety of different types of power control signals, and different power control signals correspond to different first PWM signals. Therefore, the different PWM signals may represent the different power control signals.

In an example, the first PWM signal may be a duty cycle signal with a specific amplitude and a specific frequency. For example, the first PWM signal may be a duty cycle signal with an amplitude of 12 V and a frequency of 1 kHz.

Optionally, in this embodiment of this application, the control system further includes a chassis domain controller provided in the middle section of the vehicle.

For example, the chassis domain controller and the body domain controller are connected via the first communication bus.

Optionally, in this embodiment of this application, the body domain controller is further connected to a parking signal apparatus (EPB, Electrical Park Brake) within a third preset distance range.

For example, the parking signal apparatus includes an electronic parking brake system.

It will be understood that the electronic parking brake system is directly connected to the body domain controller via a hard wire, and a signal of the electronic parking brake system is transmitted from the body domain controller to the power signal apparatus via the hard wire.

Optionally, the control system may further include a first transceiver and a second transceiver.

For example, the first transceiver is configured to transmit the power signal of the body domain controller, and the second transceiver is configured to transmit the control signal of the power domain controller.

For example, the first transceiver and the second transceiver are respectively connected to both sides of the communication connection.

It will be understood that the first transceiver and the second transceiver may be configured to transmit signals on both sides of the communication connection.

This can implement safer vehicle control and driving at extremely low costs because a protocol transmission channel does not cause an excessive increase in hardware costs.

An embodiment of this application further provides a vehicle. The vehicle includes the control system, and the control system includes a body domain controller and a power domain controller of the vehicle.

The body domain controller is configured to acquire a first control signal of the power signal apparatus within a first preset range of the body domain controller, and a distance between the power signal apparatus and the power domain controller exceeds the first preset range.

The power domain controller is configured to acquire a second control signal of the body signal apparatus within a second preset range of the power domain controller, and a distance between the body signal apparatus and the body domain controller exceeds the second preset range.

It will be noted that, although functions of the modules in this application are described in a particular order in the accompanying drawings, this does not require or imply that these operations need to be performed in the particular order, or that all the shown operations need to be performed to achieve desired results.

It will be understood that the units described in the control system correspond to the functions of the modules described in the accompanying drawings. Therefore, the operations and features described for the method also apply to the control system and the units included therein, and will not be repeated here. The control system may be pre-implemented in a browser or other security applications of a computer device, or may be loaded into the browser or other security applications of the computer device through downloading. The corresponding units in the control system may cooperate with the units in the computer device to implement the solutions in embodiments in this application.

Division into the modules or units in detailed descriptions above is not mandatory. In fact, according to this disclosure, the features and functions of the two or more modules or units described above can be embodied in one module or unit. Conversely, the features and functions of a module or unit described above may be further divided into multiple modules or units for specific purposes.

It will be noted that, for details not disclosed in the control system in this embodiment of the application, reference is made to the details disclosed in embodiments of the application, which will not be repeated here.

The units or modules described in this embodiment of the application may be implemented by using software or hardware. The described unit or module may alternatively be provided in a processor. For example, it can be described as: A control system includes a first receiving module, a second receiving module, and a sending module. In some cases, names of these units or modules do not constitute a limitation on the units or modules themselves.

The foregoing description is merely a preferred embodiment of the application and an explanation of the technical principles employed. Those skilled in the art will appreciate that the scope disclosed in this application is not limited to the technical solutions formed by a specific combination of the foregoing technical features, but will also cover other technical solutions formed by any combination of the foregoing technical features or their equivalents without departing from the disclosed concept, for example, a technical solution formed by replacing the foregoing features with technical features with similar functions disclosed in this application (but not limited thereto).

## Claims

1. A control system, used in a vehicle, wherein the control system comprises a body domain controller and a power domain controller of the vehicle;
the body domain controller is connected to a power signal apparatus within a first preset distance range;
the power domain controller is connected to a body signal apparatus within a second preset distance range;
the body domain controller and the power domain controller are connected via a first communication bus to transmit a signal of the power signal apparatus and a signal of the body signal apparatus to the power domain controller and the body domain controller respectively; and
a distance between the power signal apparatus and the power domain controller exceeds the first preset distance range; and a distance between the body signal apparatus and the body domain controller exceeds the second preset distance range.

2. The control system according to claim 1, wherein the body domain controller is located in a front area of the vehicle, and the power domain controller is located in a rear area of the vehicle.

3. The control system according to claim 1 or 2, wherein the power signal apparatus comprises at least one of an accelerator pedal apparatus and a brake pedal apparatus.

4. The control system according to any one of claims 1 to 3, wherein the body signal apparatus comprises at least one of a lamp signal apparatus, a radar signal apparatus, and a camera signal apparatus in the rear area.

5. The control system according to any one of claims 1 to 4, wherein the body domain controller and the power domain controller are further connected via a protocol transmission channel, and the protocol transmission channel is used to transmit the signal of the power signal apparatus.

6. The control system according to any one of claims 1 to 5, wherein the body domain controller and the power domain controller are further connected via a second communication bus to implement transmission of the signal of the power signal apparatus.

7. The control system according to any one of claims 1 to 6, wherein the body domain controller and the power domain controller are further connected via a hardwire, and the hardwire is used to transmit the signal of the power signal apparatus based on a pulse width modulation signal.

8. The control system according to any one of claims 1 to 7, wherein the control system further comprises a chassis domain controller provided in a middle section area of the vehicle, and the chassis domain controller is connected to the body domain controller via the first communication bus.

9. The control system according to any one of claims 1 to 8, wherein the body domain controller is further connected to a parking signal apparatus within a third preset distance range via a hardwire.

10. A vehicle, comprising the control system according to any one of claims 1 to 9, and the control system comprising a body domain controller and a power domain controller of the vehicle;
the body domain controller being connected to a power signal apparatus within a first preset distance range;
the power domain controller being connected to a body signal apparatus within a second preset distance range;
the body domain controller and the power domain controller being connected via a first communication bus to transmit a signal of the power signal apparatus and a signal of the body signal apparatus to the power domain controller and the body domain controller respectively; and
a distance between the power signal apparatus and the power domain controller exceeding the first preset distance range; and a distance between the body signal apparatus and the body domain controller exceeding the second preset distance range.
